# EUROPEAN PATENT APPLICATION

(11) **EP 2 320 082 A1**
(43) Date of publication of application: **11.05.2011**
(21) Application number: 09811430.9
(22) Date of filing: 26.08.2009
(51) Int. Cl.: F03D 11/00, F03D 1/06

(54) **WIND WHEEL BLADE**

(30) Priority: 04.09.2008 JP 2008227372
(71) Applicant: Mitsubishi Heavy Industries, Ltd., Tokyo 108-8215 (JP)
(72) Inventor: KAWASETSU, Nozomu, Nagasaki-shi Nagasaki 851-0392 (JP); ESAKI, Kouji, Nagasaki-shi Nagasaki 851-0392 (JP); KUROIWA, Takao, Nagasaki-shi Nagasaki 851-0392 (JP); HORI, Shinichi, Nagasaki-shi Nagasaki 850-8610 (JP)
(74) Representative: Intès, Didier Gérard André
(86) International application number: PCT/JP2009/064879
(87) International publication number: WO 2010/026903

(57) **Abstract**

A wind-turbine blade that prevents foreign matter from entering the inside thereof during transportation and that can be efficiently assembled in good condition is provided.
A wind-turbine blade (9) includes a skin (14) that forms a long and hollow shape, and a main spar (16) that extends in the longitudinal direction and reinforces the skin (14) from the inside thereof. The main spar (16) is divided into a blade-root-side main spar (31) and a blade-tip-side main spar (33) in the longitudinal direction; the blade-root-side main spar (31) and the blade-tip-side main spar (33) have connection sections (50) that are connected to each other; the skin (14) is divided into a connection-section skin (25), located at a position corresponding to the connection sections (50), a blade-root-side skin (21), and a blade-tip-side skin (23); and openings (43) formed in the blade-root-side skin (21) and the blade-tip-side skin (23) are blocked off by blanking plates (45).

## Description

### {Technical Field}

The present invention relates to wind-turbine blades.

### {Background Art}

In recent years, wind turbine generators have increased in size for enhancing their electricity generation efficiency and for generating more electricity. An increase in the size of wind turbine generators has caused a corresponding increase in the size of wind-turbine blades; for example, the blade length is 40 meters or more.
Such large blades cause various kinds of difficulties, such as a difficulty in fabricating each blade as a single unit and a difficulty in transportation since it is difficult to ensure roads, transporter vehicles, and the like.
In order to overcome such difficulties, examples of wind-turbine blades that are divided into segments in the longitudinal direction have been proposed, as in Patent Literatures 1 to 3.
In the example discussed in Patent Literature 1, the divided structure is designed so as to ensure sufficient strength with the skin alone. In the example discussed in Patent Literature 2, the divided structure is designed so as to significantly reduce the time and labor required for the connecting process. In the example discussed in Patent Literature 3, the divided structure is designed so as to have strength sufficient to be able to withstand actual usage without leading to an increase in weight.

### {Citation List}

### {Patent Literature}

{PTL 1} Japanese Unexamined Patent Application, Publication No. 2004-11616
{PTL 2} Japanese Unexamined Patent Application, Publication No. 2005-147086
{PTL 3} Japanese Unexamined Patent Application, Publication No. 2005-240783 {Summary of Invention}

### {Technical Problem}

In Patent Literatures 1 to 3, the divided areas are open. With regard to wind-turbine blades, the fabrication site and the installation site thereof are distant from each other, and the installation site is nearly always located where the force of wind is strong.
Therefore, during transportation of the wind-turbine blades, dust, sand, dirt, and the like may enter through the openings in the divided areas. A large amount of such dust, sand, dirt, and the like can have an adverse effect on the rotation of the wind-turbine blades, reducing the electricity generation efficiency and causing breakage. The process for removing such dust, sand, dirt, and the like is troublesome and time-consuming.
Although the examples discussed in Patent Literatures 1 to 3 are given various designs for improvement, the maintainability thereof, such as the ease of assembly and disassembly, is still insufficient and requires further improvement.

In view of the circumstances described above, the present invention provides a wind-turbine blade that prevents foreign matter from entering the inside thereof during transportation and that can be efficiently assembled in good condition.

### {Solution to Problem}

In order to solve the aforementioned problems, the present invention provides the following solutions.
An aspect of the present invention provides a wind-turbine blade that includes a skin that forms a long and hollow shape, and a spar that extends in the longitudinal direction and reinforces the skin from the inside thereof. In the wind-turbine blade, the spar is divided into multiple spar segments in the longitudinal direction, and the spar segments adjacent to each other have connection sections that are connected to each other. The skin is divided into a connection-section skin, located at a position corresponding to the connection sections, and a main-body skin. An opening formed in the main-body skin is blocked off by a blocking plate.

The wind-turbine blade according to this aspect is fabricated in units of the divided main-body skin and the spar segments. In other words, since the wind-turbine blade is fabricated in the form of longitudinally divided parts, a high-quality wind-turbine blade can be readily fabricated at low cost, as compared with that fabricated as a single unit.
Since the wind-turbine blade is transported in fabricated units, transporter vehicles can be readily procured and the selection of roads is facilitated. Since this allows for efficient transportation, the transportation time can be shortened, and cost reduction can be achieved.
Because the opening formed in the main-body skin is blocked off by the blocking plate, dust, sand, dirt, and the like are prevented from entering the hollow interiors during transportation. Therefore, since a process for removing dust, sand, dirt, and the like becomes unnecessary during assembly of the wind-turbine blade, the time required for such a process can be eliminated.
The assembly process of the wind-turbine blade at the installation site is performed by connecting the connection sections of the spar segments to each other while the connection-section skin to be located at the position corresponding to the connection sections is placed separately. Since the connection-section skin is open in this manner, the connection sections are readily accessible. Therefore, the connection sections can be readily and efficiently connected within a short time.

In the aforementioned aspect, the connection sections may be connected by a connecting member that lies astride the spar segments opposed to each other so as to connect the spar segments.
Accordingly, since the structure of the spar segments can be simplified, the fabrication process can be facilitated.

In the aforementioned aspect, the connection sections may be connected by overlapping with each of the spar segments opposed to each other.
Accordingly, since an additional member for joining the spar segments is not required, an increase in cost can be suppressed.

In the aforementioned aspect, an electrically-conductive cable extending in the longitudinal direction is preferably divided into segments that are connectable to each other at the position corresponding to the connection sections.
Accordingly, since the electrically-conductive cable can be set over the entire length of the wind-turbine blade, deterioration of the lightning protection performance can be suppressed.

In the aforementioned aspect, the wind-turbine blade may further include a reinforcement member extending in the longitudinal direction and located at a leading-edge side and/or a trailing-edge side of the spar, and the reinforcement member may be divided into segments connectable to each other at the position corresponding to the connection sections.
Accordingly, since the reinforcement member extending in the longitudinal direction and located at the leading-edge side and/or the trailing-edge side of the spar is provided, the ability of the wind-turbine blade to resist a torsion load can be increased.

In the aforementioned aspect, the joint sections may be configured to be joint plates formed substantially integrally with the spar segments.
Accordingly, since this eliminates the need for forming a connection structure in the actual spar segments, the spar segments can be readily fabricated.
The spar segments and the joint plates are preferably attached so that, for example, they constitute a single unit in terms of strength via the blocking plate.

In the aforementioned configuration, the joint plates may include a plurality of joint plates provided in the chord direction of the blade.
Accordingly, the strength of the joint sections can be increased.

In the aforementioned configuration, it is preferable that at least one of the joint plates be attached such that the thickness direction thereof is substantially orthogonal to the chord direction.
Accordingly, since the width direction of the joint plate is aligned with the chord direction, the ability of the wind-turbine blade to resist a torsion load can be increased.

### {Advantageous Effects of Invention}

According to the present invention, the wind-turbine blade is fabricated in units of the divided main-body skin and the spar segments. In other words, since the wind-turbine blade is fabricated in the form of longitudinally divided parts, a high-quality wind-turbine blade can be readily fabricated at low cost, as compared with that fabricated as a single unit.
Since the wind-turbine blade is transported in fabricated units, transporter vehicles can be readily procured and the selection of roads is facilitated. Since this allows for efficient transportation, the transportation time can be shortened, and cost reduction can be achieved.
Because the opening formed in the main-body skin is blocked off by the blocking plate, dust, sand, dirt, and the like are prevented from entering the hollow interiors during transportation. Therefore, since a process for removing dust, sand, dirt, and the like becomes unnecessary during assembly of the wind-turbine blade, the time required for such a process can be eliminated.

The assembly process of the wind-turbine blade at the installation site is performed by connecting the connection sections of the spar segments to each other while the connection-section skin to be located at the position corresponding to the connection sections is placed separately. Since the connection-section skin is open in this manner, the connection sections are readily accessible. Therefore, the connection sections can be readily and efficiently connected within a short time.

### {Brief Description of Drawings}

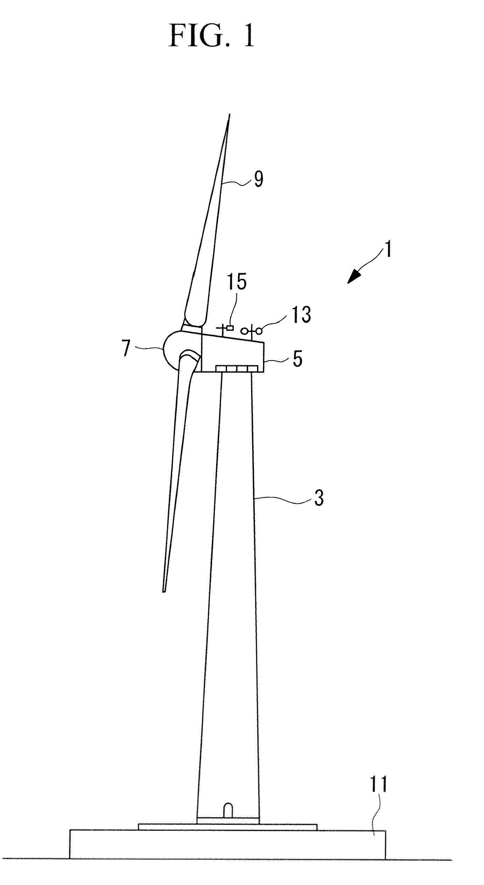

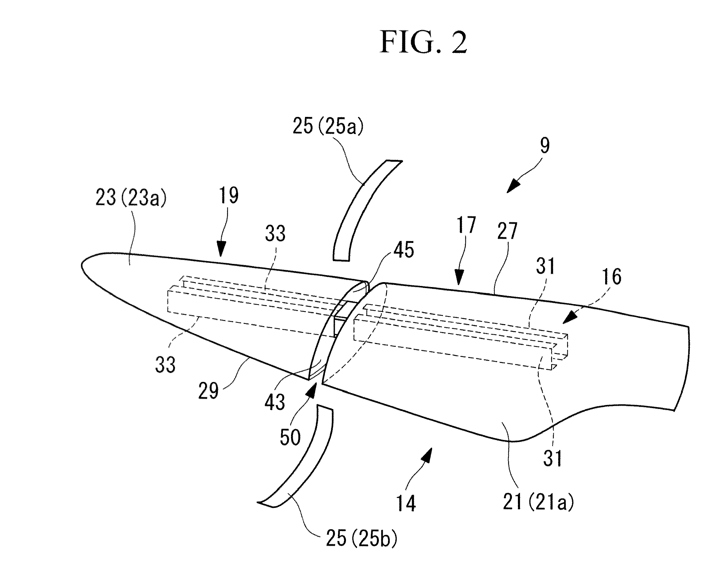

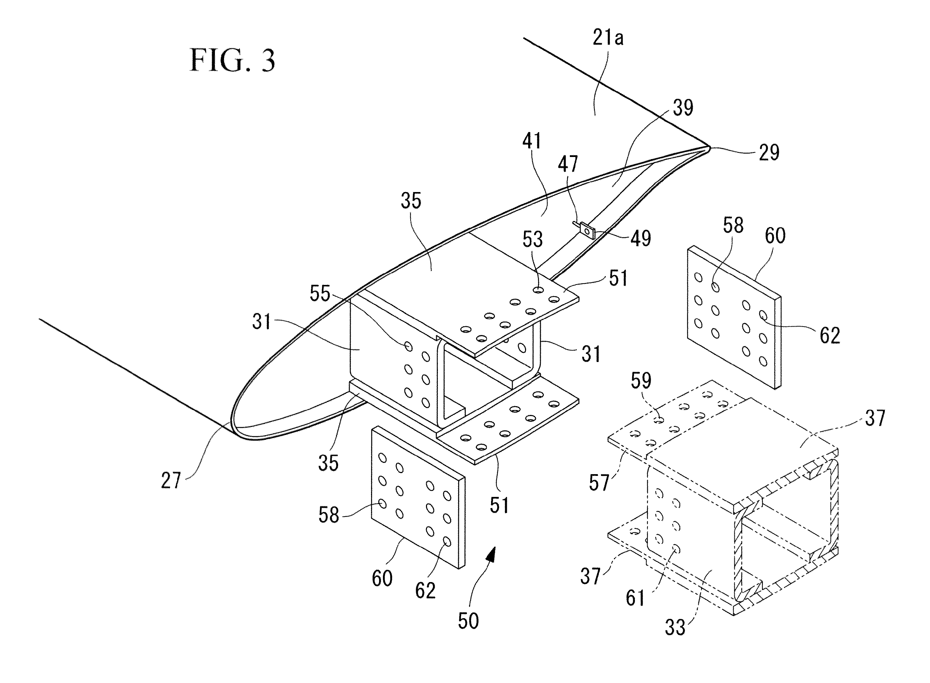

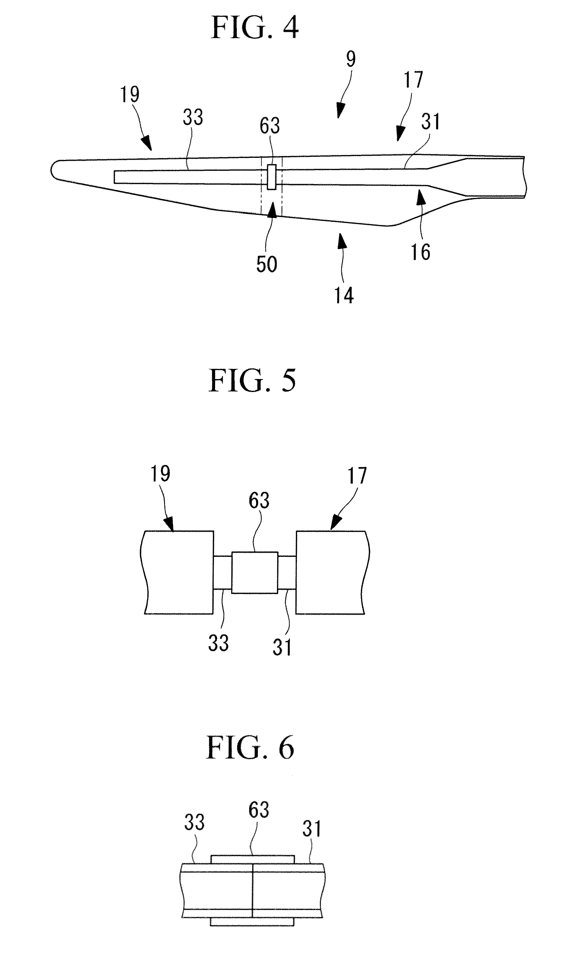

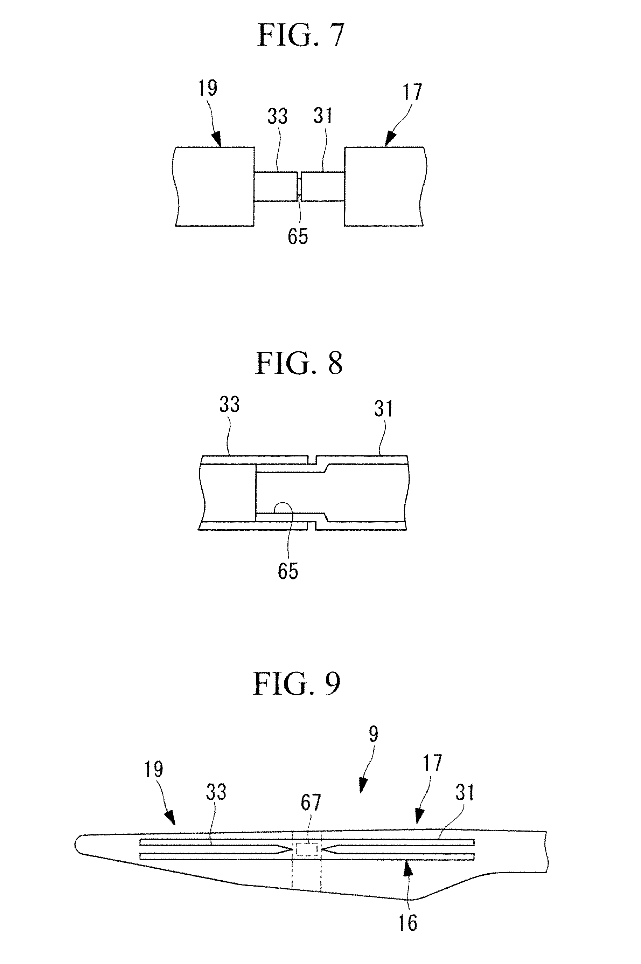

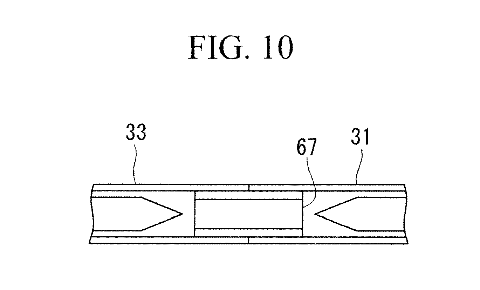

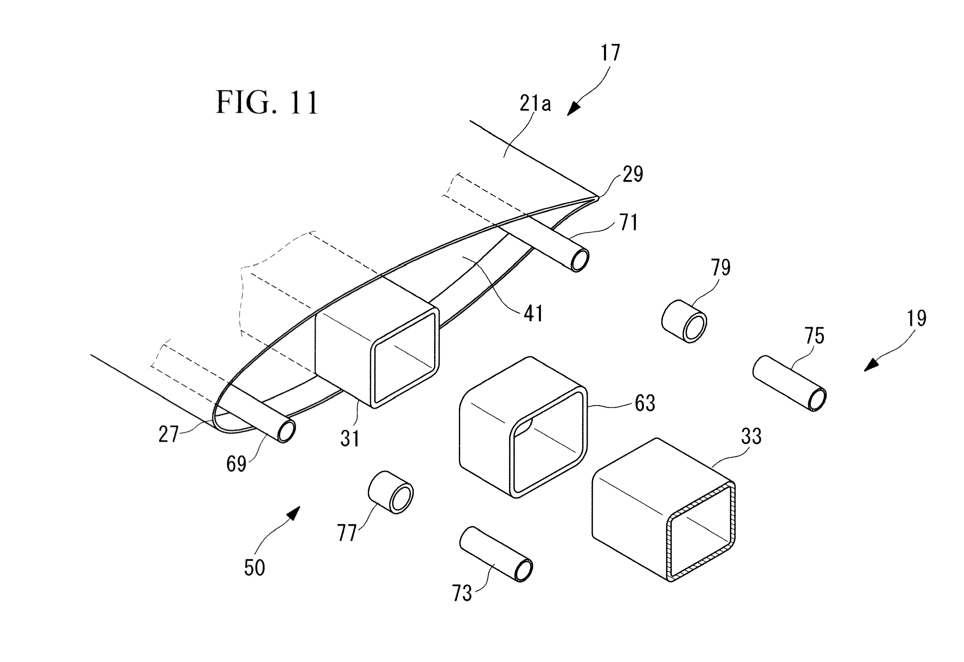

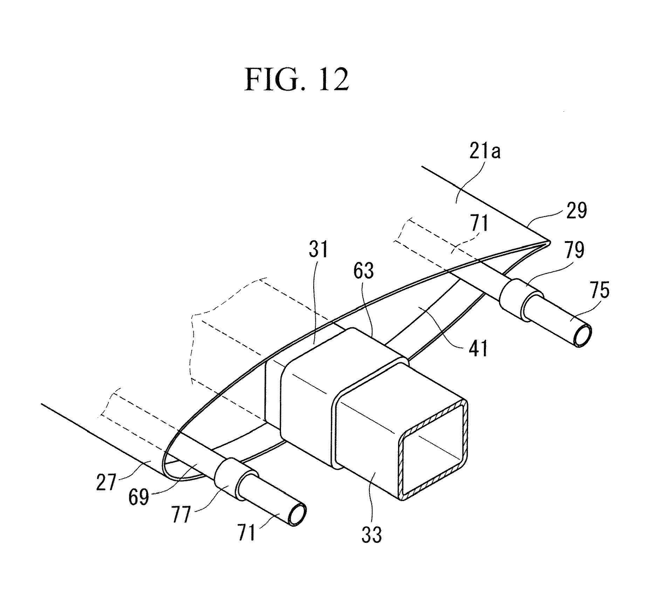

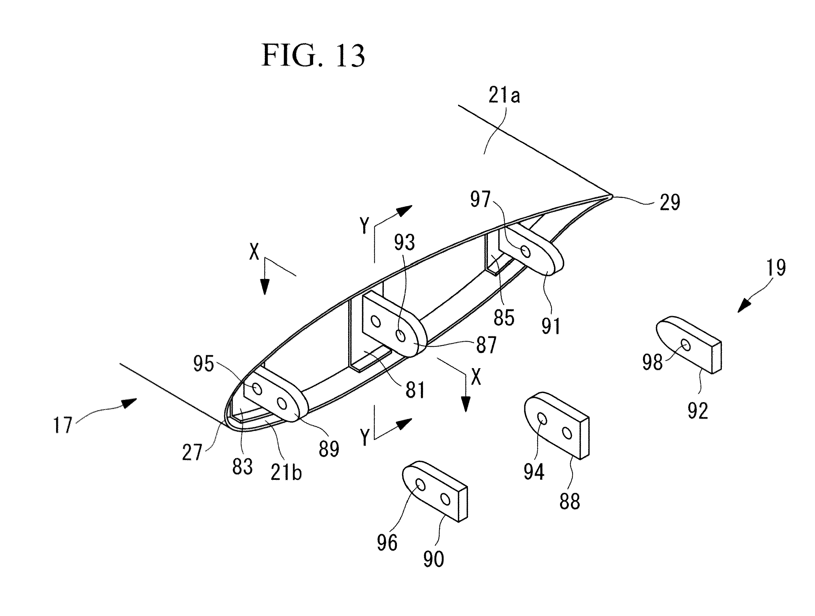

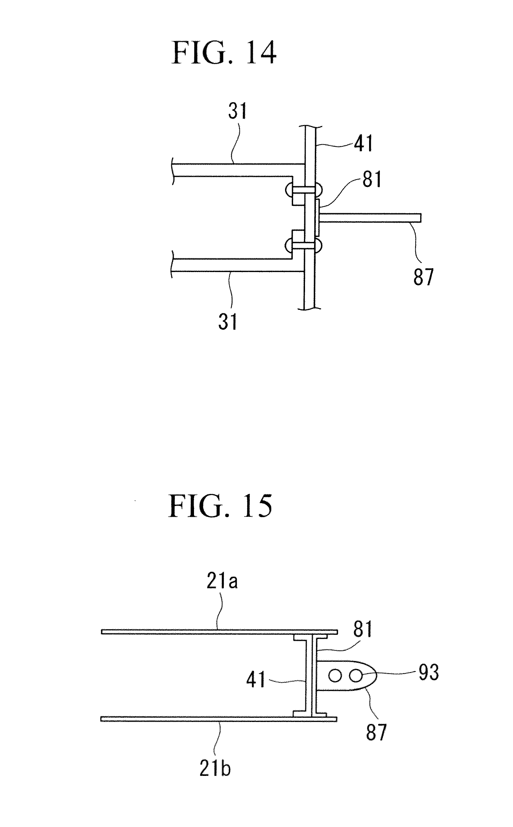

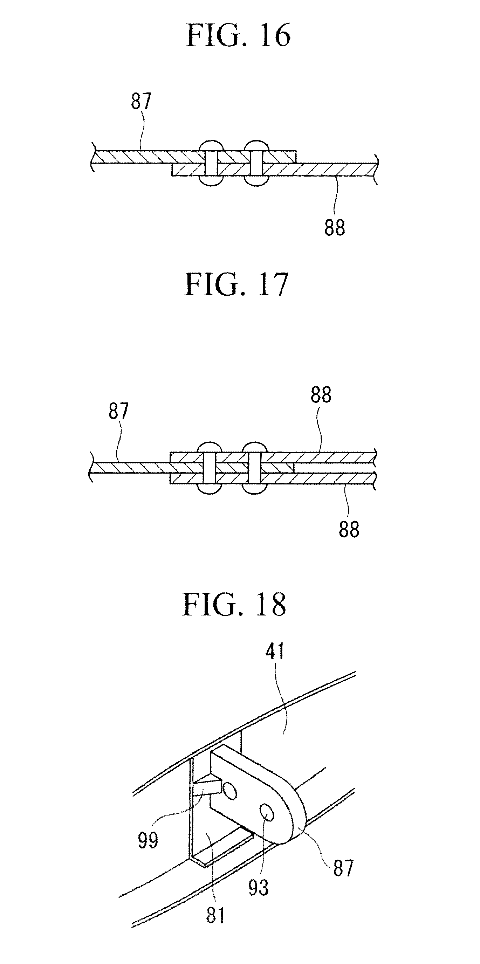

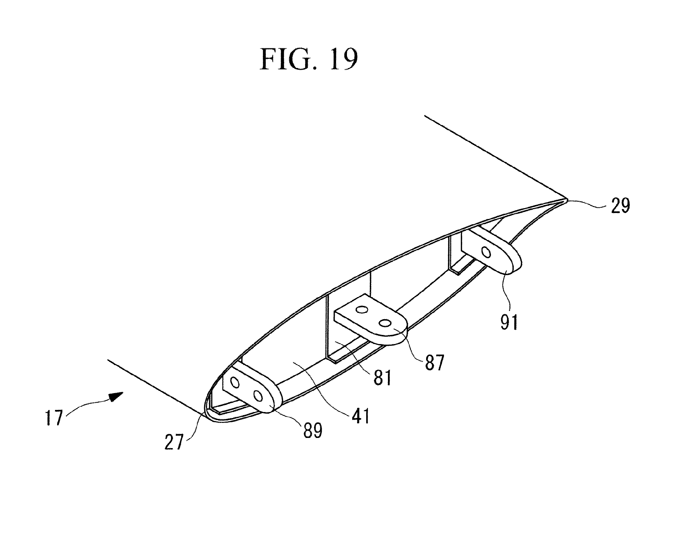

{Fig. 1} Fig. 1 is a side view illustrating the overall schematic configuration of a wind turbine generator according to a first embodiment of the present invention.
{Fig. 2} Fig. 2 is a perspective view illustrating a wind-turbine blade according to the first embodiment of the present invention.
{Fig. 3} Fig. 3 is a partial perspective view illustrating the configuration of connection sections according to the first embodiment of the present invention.
{Fig. 4} Fig. 4 is a plan view illustrating a wind-turbine blade according to a second embodiment of the present invention.
{Fig. 5} Fig. 5 is a partial plan view illustrating connection sections according to the second embodiment of the present invention.
{Fig. 6} Fig. 6 is a partial cross-sectional view illustrating the connection sections according to the second embodiment of the present invention.
{Fig. 7} Fig. 7 is a partial plan view illustrating an alternative example of connection sections according to the second embodiment of the present invention.
{Fig. 8} Fig. 8 is a partial cross-sectional view illustrating the alternative example of the connection sections according to the second embodiment of the present invention.
{Fig. 9} Fig. 9 is a plan view illustrating a wind-turbine blade according to a third embodiment of the present invention.
{Fig. 10} Fig. 10 is a partial plan view illustrating connection sections according to the third embodiment of the present invention.
{Fig. 11} Fig. 11 is a perspective view illustrating connection sections of a wind-turbine blade according to a fourth embodiment of the present invention.
{Fig. 12} Fig. 12 is a perspective view illustrating a connected state of the connection sections of the wind-turbine blade according to the fourth embodiment of the present invention.
{Fig. 13} Fig. 13 is a perspective view illustrating connection sections of a wind-turbine blade according to a fifth embodiment of the present invention.
{Fig. 14} Fig. 14 is a cross-sectional view taken along line X-X in Fig. 13.
{Fig. 15} Fig. 15 is a cross-sectional view taken along line Y-Y in Fig. 13.
{Fig. 16} Fig. 16 is a partial cross-sectional view illustrating a connected state between a blade-root-side center joint plate and a blade-tip-side center joint plate according to the fifth embodiment of the present invention.
{Fig. 17} Fig. 17 is a partial cross-sectional view illustrating a connected state between the blade-root-side center joint plate and a blade-tip-side center joint plate of an alternative example according to the fifth embodiment of the present invention.
{Fig. 18} Fig. 18 is a perspective view illustrating an alternative example of a blade-root-side center joint plate according to the fifth embodiment of the present invention.
{Fig. 19} Fig. 19 is a perspective view illustrating an alternative example of connection sections according to the fifth embodiment of the present invention.

### {Description of Embodiments}

Embodiments of the present invention will be described below with reference to the drawings.

### {First Embodiment}

A wind turbine generator 1 according to a first embodiment of the present invention will now be described with reference to Figs. 1 to 3.
Fig. 1 is a side view illustrating the overall schematic configuration of the wind turbine generator 1.
As shown in Fig. 1, the wind turbine generator 1 includes a tower 3 standing upright on a foundation 11, a nacelle 5 disposed on the top of the tower 3, a hub 7 provided in the nacelle 5 in a rotatable manner about a rotation axis extending substantially in the horizontal direction, and multiple, e.g., three, wind-turbine blades 9 attached to the hub 7 so as to extend radially around the rotation axis thereof.
The force of wind striking the wind-turbine blades 9 in the rotation-axis direction of the hub 7 is converted to power that rotates the hub 7 about the rotation axis.

An anemometer 13 that measures the ambient wind speed value, an anemoscope 15 that measures the wind direction, and a lightning rod (not shown) are provided on the top of the nacelle 5.
Although not shown, a generator linked with the hub 7 via a gear box that is coaxial therewith is disposed inside the nacelle 5. Specifically, the generator is driven by increasing the speed of rotation of the hub 7 using the gear box so that generator output power can be obtained by the generator.

Fig. 2 is a perspective view illustrating one of the wind-turbine blades 9 in the process of being assembled.
The wind-turbine blade 9 includes a long and hollow skin 14 that defines the shape of the blade and multiple, e.g., two, main spars (spars) 16 extending longitudinally through the interior of the skin so as to reinforce the strength of the skin 14.
The wind-turbine blade 9 is divided into two segments, i.e., a blade-root-side wind-turbine blade 17 and a blade-tip-side wind-turbine blade 19, in the longitudinal direction.
The skin 14 is constituted of a blade-root-side skin (main-body skin) 21, a blade-tip-side skin (main-body skin) 23, and a connection-section skin 25.

The blade-root-side skin 21, the blade-tip-side skin 23, and the connection-section skin 25 are each formed of two halves, i.e., a back skin and a front skin. In order to differentiate between the back skin and the front skin in the following description, the blade-root-side skin 21, the blade-tip-side skin 23, and the connection-section skin 25 will be given a suffix "a" or "b" after their reference numerals. A suffix "a" denotes a back skin, whereas a suffix "b" denotes a front skin.
A joint between the back skins and the front skins forms a leading edge 27 and a trailing edge 29 of the wind-turbine blade 9.
The blade-root-side skin 21, the blade-tip-side skin 23, and the connection-section skin 25 are composed of fiberglass-reinforced plastic or carbon-fiber-reinforced plastic. Alternatively, the material thereof may be, for example, carbon-fiber-reinforced plastic, or another material may be used. Using carbon-fiber-reinforced plastic, which has great strength and high rigidity, makes it possible to readily cope with an increase in the size of the wind-turbine blade 9.

The main spars 16 are each divided into two segments, i.e., a blade-root-side main spar (spar segment) 31 and a blade-tip-side main spar (spar segment) 33, in the longitudinal direction.
Regarding the pair of blade-root-side main spars 31 and the pair of blade-tip-side main spars 33, each main spar has an angular U-shape in cross section, and each pair is attached such that openings thereof face each other.
The blade-root-side main spars 31 and the blade-tip-side main spars 33 are composed of fiberglass-reinforced plastic. Alternatively, the material thereof may be, for example, carbon-fiber-reinforced plastic, or another material may be used.

Blade-root-side reinforcement layers 35 are interposed between the blade-root-side main spars 31 and the blade-root-side skin 21. The blade-root-side reinforcement layers 35 are composed of fiberglass-reinforced plastic and are integrally formed with the blade-root-side skin 21 and the blade-root-side main spars 31.
Blade-tip-side reinforcement layers 37 are interposed between the blade-tip-side main spars 33 and the blade-tip-side skin 23. The blade-tip-side reinforcement layers 37 are composed of fiberglass-reinforced plastic and are integrally formed with the blade-tip-side skin 23 and the blade-tip-side main spars 33. Alternatively, the material of the blade-root-side reinforcement layers 35 and the blade-tip-side reinforcement layers 37 may be, for example, carbon-fiber-reinforced plastic, or another material may be used.

The blade-tip side of the blade-root-side wind-turbine blade 17 is provided with an opening 39. The opening 39 is blocked off by a blanking plate (blocking plate) 41 composed of fiberglass-reinforced plastic.
The blade-root side of the blade-tip-side wind-turbine blade 19 is provided with an opening 43. The opening 43 is blocked off by a blanking plate (blocking plate) 45 composed of fiberglass-reinforced plastic.
The blade-root-side wind-turbine blade 17 and the blade-tip-side wind-turbine blade 19 each have an electrically-conductive cable 47 attached thereto and extending in the longitudinal direction thereof. The material of the blanking plates 41 and 45 may alternatively be, for example, carbon-fiber-reinforced plastic, or another material may be used.
The electrically-conductive cables 47 protrude outward from the respective blanking plates 41 and 45 and have connection terminals 49 attached to protruding ends thereof.

The blade-root-side main spars 31 and the blade-root-side reinforcement layers 35 protrude outward from the blanking plate 41. The blade-root-side reinforcement layers 35 protrude further outward than the blade-root-side main spars 31 and each have a thin-walled portion 51 formed to have a thin wall by scraping off the inner side of an end portion of the blade-root-side reinforcement layer 35. Multiple through-holes 53 spaced apart in the blade-width direction are formed in two rows in each thin-walled portion 51.
Multiple through-holes 55 spaced apart in the blade-height direction are formed in two rows in an end portion of the side surface of each blade-root-side main spar 31.

The blade-tip-side main spars 33 and the blade-tip-side reinforcement layers 37 protrude outward from the blanking plate 45. The blade-tip-side reinforcement layers 37 protrude further outward than the blade-tip-side main spars 33 and each have a thin-walled portion 57 formed to have a thin wall by scraping off the outer side of an end portion of the blade-tip-side reinforcement layer 37. Multiple through-holes 59 spaced apart in the blade-width direction are formed in two rows in each thin-walled portion 57.
Multiple through-holes 61 spaced apart in the blade-height direction are formed in two rows in an end portion of the side surface of each blade-tip-side main spar 33.
The disposed position of the through-holes 55, the disposed position of the through-holes 53 (through-holes 59), and the disposed position of the through-holes 61 are shifted from each other in the longitudinal direction of the wind-turbine blade 9.

A portion, protruding outward from the blanking plate 41, of the blade-root-side main spars 31 and the blade-root-side reinforcement layers 35 and a portion, protruding outward from the blanking plate 45, of the blade-tip-side main spars 33 and the blade-tip-side reinforcement layers 37 each constitute a connection section 50. When in a connected state, the thin-walled portions 51 and the thin-walled portions 57 overlap with each other so that the through-holes 53 and the through-holes 59 communicate with each other.
In this state, the blade-root-side main spars 31 and the blade-tip-side main spars 33 are positioned with a gap interposed therebetween. Connecting plates (connecting member) 60 composed of fiberglass-reinforced plastic for joining the blade-root-side main spars 31 and the blade-tip-side main spars 33 are provided. The connecting plate 60 are provided with through-holes 58 that correspond to the through-holes 55 of the blade-root-side main spars 31 and through-holes 62 that correspond to the through-holes 61 of the blade-tip-side main spars 33. The material of the connecting plate 60 may alternatively be, for example, carbon-fiber-reinforced plastic, or another material may be used.

A fabrication process and an assembly process of each of the wind-turbine blades 9 having the above-described configuration will now be described.
The blade-root-side skin 21, the blade-tip-side skin 23, and the connection-section skin 25 are each fabricated as two halves, i.e., the back skin and the front skin.
The blade-root-side main spars 31, the blade-tip-side main spars 33, the blanking plates 41 and 45, and the connecting plates 60 are fabricated.
The blade-root-side wind-turbine blade 17 is fabricated by combining the two halves, i.e., the back skin and the front skin, of the blade-root-side skin 21, the blade-root-side main spars 31, the blanking plate 41, and the electrically-conductive cable 47.

The blade-tip-side wind-turbine blade 19 is fabricated by combining the two halves, i.e., the back skin and the front skin, of the blade-tip-side skin 23, the blade-tip-side main spars 33, the blanking plate 45, and the electrically-conductive cable 47.
Since the blade-root-side wind-turbine blade 17 or the blade-tip-side wind-turbine blade 19 is fabricated as one of the longitudinally divided parts in this manner, a high-quality blade-root-side wind-turbine blade 17 or blade-tip-side wind-turbine blade 19 can be readily fabricated at low cost, as compared with that fabricated as a single unit.
In other words, the molds used for fabricating the blade-root-side skin 21, the blade-tip-side skin 23, the blade-root-side main spars 31, and the blade-tip-side main spars 33 can be made compact. Since this allows for high quality control, the quality is enhanced. In addition, since the number of rejects caused by fabrication errors is reduced, the production yield rate is enhanced. Moreover, the space required for the fabrication can be made smaller.

The blade-root-side wind-turbine blade 17, the blade-tip-side wind-turbine blade 19, the connection-section skin 25, and the connecting plates 60 that have been fabricated are transported to an installation site of the wind turbine generator 1.
At this time, since the blade-root-side wind-turbine blade 17 and the blade-tip-side wind-turbine blade 19 each have a size and a weight that are substantially half of those of a single-piece wind-turbine blade 9, transporter vehicles can be readily procured and the selection of roads is facilitated. Since this allows for efficient transportation, the transportation time can be shortened, and cost reduction can be achieved.

Since the openings 39 and 43 of the blade-root-side wind-turbine blade 17 and the blade-tip-side wind-turbine blade 19 are respectively blocked off by the blanking plates 41 and 45, dust, sand, dirt, and the like are prevented from entering the hollow interiors, formed by the blade-root-side skin 21 and the blade-tip-side skin 23, during transportation.
Therefore, since a process for removing dust, sand, dirt, and the like becomes unnecessary during assembly of the wind-turbine blade 9, the time required for such a process can be eliminated.

The blade-root-side wind-turbine blade 17, the blade-tip-side wind-turbine blade 19, the connection-section skin 25, and the connecting plates 60 that have been transported in this manner are combined in the following manner.
The blade-root-side wind-turbine blade 17 and the blade-tip-side wind-turbine blade 19 are set at a position at which the blade-root-side reinforcement layers 35 overlap the blade-tip-side reinforcement layers 37 and the through-holes 53 and the through-holes 59 communicate with each other. In this state, the blade-root-side reinforcement layers 35 and the blade-tip-side reinforcement layers 37 are joined using bolts and nuts.

Subsequently, the connecting plates 60 are set such that the through-holes 58 thereof are aligned with the through-holes 5 in the end portions of the blade-root-side main spars 31 and the through-holes 62 are aligned with the through-holes 61 in the end portions of the blade-tip-side main spars 33. In this state, the connecting plates 60 are joined to the blade-root-side main spars 31 and the blade-tip-side main spars 33 using bolts and nuts. Consequently, the blade-root-side main spars 31 and the blade-tip-side main spars 33 are integrated with each other.
Since the connecting plates 60 lie astride the blade-root-side main spars 31 and the blade-tip-side main spars 33 so as to connect them, the shape of the blade-root-side main spars 31 and the blade-tip-side main spars 33, in other words, the structure thereof, can be simplified. Consequently, the blade-root-side main spars 31 and the blade-tip-side main spars 33 can be readily fabricated.

The connection terminals 49 of the electrically-conductive cables 47 in the blade-root-side wind-turbine blade 17 and the blade-tip-side wind-turbine blade 19 are connected to each other.
Thus, since the electrically-conductive cables 47 can be set over the entire length of the wind-turbine blade 9, deterioration of the lightning protection performance of the wind-turbine blade 9 can be suppressed.
Since the connection-section skin 25 is removed in this manner, the connection sections 50 are readily accessible. Therefore, the blade-root-side reinforcement layers 35 and the blade-tip-side reinforcement layers 37, the blade-root-side main spars 31 and the blade-tip-side main spars 33, and the electrically-conductive cables 47 can be readily and efficiently connected to each other within a short time.
Furthermore, since the joint position of the blade-root-side main spars 31, the joint position of the blade-tip-side main spars 33, and the joint position between the blade-root-side reinforcement layers 35 and the blade-tip-side reinforcement layers 37 are shifted from each other in the longitudinal direction of the wind-turbine blade 9, the joining process is facilitated.

Finally, the two halves, i.e., the back skin and the front skin, of the connection-section skin 25 are disposed so as to cover the connection sections 50 and are bonded to each other using an adhesive, thereby completing the assembly process of the wind-turbine blade 9.
After assembling a predetermined number of, e.g., three, wind-turbine blades 9 in this manner, these wind-turbine blades 9 are attached to predetermined positions of the hub 7.

Although the joining process is performed using bolts and nuts in this embodiment, the joining process may alternatively be performed by riveting or by using an adhesive.
Supposing that the joining process is performed by using an adhesive, the possibility of corrosion or the like can be suppressed since all of the components constituting the wind-turbine blades 9 are composed of fiberglass-reinforced plastic.

### {Second Embodiment}

Next, a wind-turbine blade 9 according to a second embodiment of the present invention will be described with reference to Figs. 4 to 6.
In this embodiment, since the configurations of a main spar 16 and the joint structure are different from those in the first embodiment, the following description will mainly be directed to these differences, and redundant descriptions of sections that are the same as those in the first embodiment described above will be omitted. Components that are the same as those in the first embodiment will be given the same reference numerals.

In this embodiment, a single hollow main spar 16 having a rectangular shape in cross section is provided. Connection sections 50 are provided with a connecting member 63 that joins a blade-root-side main spar 31 and a blade-tip-side main spar 33 to each other. The connecting member 63 has a substantially rectangular parallelepiped shape that is hollow, and is configured to receive the blade-root-side main spar 31 and the blade-tip-side main spar 33 into the hollow section thereof.

In this embodiment, a blade-root-side wind-turbine blade 17, a blade-tip-side wind-turbine blade 19, a connection-section skin 25, and the connecting member 63 are fabricated, as in the first embodiment.
Since the advantages in this case are the same as those in the first embodiment, redundant descriptions thereof will be omitted.
The wind-turbine blade 9 is assembled in the following manner using the blade-root-side wind-turbine blade 17, the blade-tip-side wind-turbine blade 19, the connection-section skin 25, and the connecting member 63 brought to the installation site of the wind turbine generator 1.

The blade-root-side wind-turbine blade 17 and the blade-tip-side wind-turbine blade 19 are disposed such that the connection sections 50 thereof face each other. An adhesive is applied to the joint section of the blade-root-side main spar 31 of the blade-root-side wind-turbine blade 17 and to the joint section of the blade-tip-side main spar 33 of the blade-tip-side wind-turbine blade 19.
The adhesive is also applied to the inner side of the connecting member 63, which is then attached to the blade-root-side main spar 31 of the blade-root-side wind-turbine blade 17. Then, the blade-tip-side main spar 33 of the blade-tip-side wind-turbine blade 19 is attached to the connecting member 63, whereby the blade-root-side main spar 31 and the blade-tip-side main spar 33 are in a joined state, as in Fig. 6. When the adhesive dries, the joining process is completed.

Since only an end of the blade-root-side main spar 31 of the blade-root-side wind-turbine blade 17 and an end of the blade-tip-side main spar 33 of the blade-tip-side wind-turbine blade 19 need to be attached to the connecting member 63, the assembly process of the wind-turbine blade 9 is facilitated.

Although the connecting member 63 for attaching thereto the end of the blade-root-side main spar 31 of the blade-root-side wind-turbine blade 17 and the end of the blade-tip-side main spar 33 of the blade-tip-side wind-turbine blade 19 is used in this embodiment, a narrow portion 65, for example, may be provided at the end of the blade-root-side main spar 31, as shown in Figs. 7 and 8.
In this case, the adhesive is applied to the outer periphery of the narrow portion 65 and to the inner periphery of the blade-tip-side main spar 33, and the blade-root-side wind-turbine blade 17 is moved and joined to the blade-tip-side wind-turbine blade 19 so that the blade-tip-side main spar 33 is brought into engagement with the narrow portion 65.

Although the adhesive is used for the joining process in this embodiment, the joining process may alternatively be performed by using bolts, as in the first embodiment, or by riveting.

### {Third Embodiment}

Next, a wind-turbine blade 9 according to a third embodiment of the present invention will be described with reference to Figs. 9 and 10.
In this embodiment, since the configurations of a main spar 16 and the joint structure are different from those in the first embodiment, the following description will mainly be directed to these differences, and redundant descriptions of sections that are the same as those in the first embodiment described above will be omitted. Components that are the same as those in the first embodiment will be given the same reference numerals.

In this embodiment, a blade-root-side main spar 31 is formed of two blade-root-side main spar section 3 integrated with each other at ends thereof at the blade-tip side and has a rectangular shape in cross section. A blade-tip-side main spar 33 is formed of two blade-tip-side main spar sections 33 integrated with each other at ends thereof at the blade-root side, and has a rectangular shape in cross section.
Connection sections 50 are provided with a connecting member 67 that joins the blade-root-side main spar 31 and the blade-tip-side main spar 33 to each other. The connecting member 67 has a substantially rectangular parallelepiped shape that is hollow and is configured to be insertable into the blade-root-side main spar 31 and the blade-tip-side main spar 33.

In this embodiment, a blade-root-side wind-turbine blade 17, a blade-tip-side wind-turbine blade 19, a connection-section skin 25, and the connecting member 67 are fabricated, as in the first embodiment.
Since the advantages in this case are the same as those in the first embodiment, redundant descriptions thereof will be omitted.
The wind-turbine blade 9 is assembled in the following manner using the blade-root-side wind-turbine blade 17, the blade-tip-side wind-turbine blade 19, the connection-section skin 25, and the connecting member 67 brought to the installation site of the wind turbine generator 1.

The blade-root-side wind-turbine blade 17 and the blade-tip-side wind-turbine blade 19 are disposed such that the connection sections 50 thereof face each other. An adhesive is applied to the inner side of the joint section of the blade-root-side main spar 31 of the blade-root-side wind-turbine blade 17 and to the inner side of the joint section of the blade-tip-side main spar 33 of the blade-tip-side wind-turbine blade 19.
The adhesive is also applied to the outer periphery of the connecting member 67, which is then inserted into the blade-root-side main spar 31 of the blade-root-side wind-turbine blade 17. Then, the blade-tip-side main spar 33 of the blade-tip-side wind-turbine blade 19 is attached to the connecting member 67, whereby the blade-root-side main spar 31 and the blade-tip-side main spar 33 are in a joined state, as in Fig. 10. When the adhesive dries, the joining process is completed.

Since only the connecting member 67 needs to be inserted into an end of the blade-root-side main spar 31 of the blade-root-side wind-turbine blade 17 and an end of the blade-tip-side main spar 33 of the blade-tip-side wind-turbine blade 19, the assembly process of the wind-turbine blade, 9 is facilitated.
Although the adhesive is used for the joining process in this embodiment, the joining process may alternatively be performed by using bolts, as in the first embodiment, or by riveting.

### {Fourth Embodiment}

Next, a wind-turbine blade 9 according to a fourth embodiment of the present invention will be described with reference to Figs. 11 and 12.
In this embodiment, since the reinforcement structure of the wind-turbine blade 9 is different from that in the second embodiment, the following description will mainly be directed to this difference, and redundant descriptions of sections that are the same as those in the second embodiment (and the first embodiment) described above will be omitted. Components that are the same as those in the first embodiment will be given the same reference numerals.

In this embodiment, a blade-root-side wind-turbine blade 17 includes a hollow and substantially cylindrical blade-root-side leading-edge reinforcement member (reinforcement member) 69 at a leading edge 27 side of a blade-root-side main spar 31 and a hollow and substantially cylindrical blade-root-side trailing-edge reinforcement member (reinforcement member) 71 at a trailing edge 29 side thereof.
A blade-tip-side wind-turbine blade 19 includes a hollow and substantially cylindrical blade-tip-side leading-edge reinforcement member (reinforcement member) 73 at the leading edge 27 side of a blade-tip-side main spar 33 and a hollow and substantially cylindrical blade-tip-side trailing-edge reinforcement member (reinforcement member) 75 at the trailing edge 29 side thereof.

A connecting member 77 that joins the blade-root-side leading-edge reinforcement member 69 and the blade-tip-side leading-edge reinforcement member 73 to each other is provided. The connecting member 77 has a substantially cylindrical shape that is hollow, and is configured to receive the blade-root-side leading-edge reinforcement member 69 and the blade-tip-side leading-edge reinforcement member 73 into the hollow section thereof.
A connecting member 79 that joins the blade-root-side trailing-edge reinforcement member 71 and the blade-tip-side trailing-edge reinforcement member 75 to each other is provided. The connecting member 79 has a substantially cylindrical shape that is hollow, and is configured to receive the blade-root-side trailing-edge reinforcement member 71 and the blade-tip-side trailing-edge reinforcement member 75 into the hollow section thereof.

In this embodiment, the blade-root-side wind-turbine blade 17, the blade-tip-side wind-turbine blade 19, a connection-section skin 25, and a connecting member 63 are fabricated, as in the first embodiment.
Since the advantages in this case are the same as those in the first embodiment, redundant descriptions thereof will be omitted.
The wind-turbine blade 9 is assembled in the following manner using the blade-root-side wind-turbine blade 17, the blade-tip-side wind-turbine blade 19, the connection-section skin 25, and the connecting member 63 brought to the installation site of the wind turbine generator 1.

The blade-root-side wind-turbine blade 17 and the blade-tip-side wind-turbine blade 19 are disposed such that the connection sections 50 thereof face each other.
An adhesive is applied to the joint sections of the blade-root-side main spar 31, the blade-root-side leading-edge reinforcement member 69, and the blade-root-side trailing-edge reinforcement member 71 of the blade-root-side wind-turbine blade 17.
The adhesive is also applied to the joint sections of the blade-tip-side main spar 33, the blade-tip-side leading-edge reinforcement member 73, and the blade-tip-side trailing-edge reinforcement member 75 of the blade-tip-side wind-turbine blade 19.

The adhesive is applied to the inner side of the connecting member 63, which is then attached to the blade-root-side main spar 31 of the blade-root-side wind-turbine blade 17. The adhesive is applied to the inner side of the connecting members 77 and 79, which are then respectively attached to the blade-root-side leading-edge reinforcement member 69 and the blade-root-side trailing-edge reinforcement member 71 of the blade-root-side wind-turbine blade 17.
Subsequently, as shown in Fig. 12, the blade-tip-side main spar 33 of the blade-tip-side wind-turbine blade 19 is attached to the connecting member 63, the blade-tip-side leading-edge reinforcement member 73 is attached to the connecting member 77, and the blade-tip-side trailing-edge reinforcement member 75 is attached to the connecting member 79. When the adhesive dries, the joining process is completed.

In addition to the advantages of the second embodiment, since the wind-turbine blade 9 in this embodiment is provided with a reinforcement member formed of the blade-root-side leading-edge reinforcement member 69 and the blade-tip-side leading-edge reinforcement member 73 at the leading edge 27 side of the main spar 16 and a reinforcement member formed of the blade-root-side trailing-edge reinforcement member 71 and the blade-tip-side trailing-edge reinforcement member 75, the ability of the wind-turbine blade 9 to resist a torsion load can be increased.
Although the adhesive is used for the joining process in this embodiment, the joining process may alternatively be performed by using bolts, as in the first embodiment, or by riveting. Furthermore, the reinforcement members 69, 73, 71, and 75 may have a circular or rectangular shape that is hollow or solid.

### {Fifth Embodiment}

Next, a wind-turbine blade 9 according to a fifth embodiment of the present invention will be described with reference to Figs. 13 to 16.
In this embodiment, since the configurations of a main spar 16 and the joint structure are different from those in the first embodiment, the following description will mainly be directed to these differences, and redundant descriptions of sections that are the same as those in the first embodiment described above will be omitted. Components that are the same as those in the first embodiment will be given the same reference numerals.

As shown in Fig. 14, in this embodiment, blade-tip-side ends of blade-root-side main spars 31 are riveted to a blanking plate 41 (see Fig. 14). Although not shown, blade-root-side ends of blade-tip-side main spars 33 are similarly riveted to a blanking plate 45.
A center reinforcement layer 81, a leading-edge reinforcement layer 83, and a trailing-edge reinforcement layer 85 are tightly attached to the blade tip side of the blanking plate 41 with an adhesive (see Fig. 15).
A blade-root-side center joint plate (joint plate) 87 is attached to the center reinforcement layer 81, a blade-root-side leading-edge joint plate (joint plate) 89 is attached to the leading-edge reinforcement layer 83, and a blade-root-side trailing-edge joint plate (joint plate) 91 is attached to the trailing-edge reinforcement layer 85, such that the thickness direction thereof is oriented in the chord direction (i.e., a direction connecting the leading edge 27 and the trailing edge 29).

A blade-tip-side wind-turbine blade 19 has a similar structure to that of a blade-root-side wind-turbine blade 17 and includes a blade-tip-side center joint plate 88, a blade-tip-side leading-edge joint plate 90, and a blade-tip-side trailing-edge joint plate 92 that correspond to the blade-root-side center joint plate 87, the blade-root-side leading-edge joint plate 89, and the blade-root-side trailing-edge joint plate 91, respectively.
The blade-root-side center joint plate 87, the blade-root-side leading-edge joint plate 89, and the blade-root-side trailing-edge joint plate 91 are formed substantially integrally with the blade-root-side main spars 31 via the center reinforcement layer 81, the leading-edge reinforcement layer 83, the trailing-edge reinforcement layer 85, and the blanking plate 41.
The blade-tip-side center joint plate 88, the blade-tip-side leading-edge joint plate 90, and the blade-tip-side trailing-edge joint plate 92 are also formed substantially integrally with the blade-tip-side main spars 33.

The blade-root-side center joint plate 87 is provided with through-holes 93, the blade-root-side leading-edge joint plate 89 is provided with through-holes 95, and the blade-root-side trailing-edge joint plate 91 is provided with a through-hole 97.
The blade-tip-side center joint plate 88 is provided with through-holes 94, the blade-tip-side leading-edge joint plate 90 is provided with through-holes 96, and the blade-tip-side trailing-edge joint plate 92 is provided with a through-hole 98.

In this embodiment having such a configuration, the blade-root-side wind-turbine blade 17, the blade-tip-side wind-turbine blade 19, a connection-section skin 25, and the like are fabricated in a substantially similar manner to the first embodiment.
Since the advantages in this case are the same as those in the first embodiment, redundant descriptions thereof will be omitted.
The wind-turbine blade 9 is assembled in the following manner using the blade-root-side wind-turbine blade 17, the blade-tip-side wind-turbine blade 19, and the connection-section skin 25 brought to the installation site of the wind turbine generator 1.

The blade-root-side wind-turbine blade 17 and the blade-tip-side wind-turbine blade 19 are disposed such that the connection sections 50 thereof face each other.
Then, the blade-root-side wind-turbine blade 17 and the blade-tip-side wind-turbine blade 19 are set at a position at which the blade-root-side center joint plate 87, the blade-root-side leading-edge joint plate 89, and the blade-root-side trailing-edge joint plate 91 respectively abut on the blade-tip-side center joint plate 88, the blade-tip-side leading-edge joint plate 90, and the blade-tip-side trailing-edge joint plate 92, and the through-holes 93, the through-holes 95, and the through-hole 97 respectively communicate with the through-holes 94, the through-holes 96, and the through-hole 98.
In this state, the blade-root-side center joint plate 87, the blade-root-side leading-edge joint plate 89, and the blade-root-side trailing-edge joint plate 91 are respectively joined to the blade-tip-side center joint plate 88, the blade-tip-side leading-edge joint plate 90, and the blade-tip-side trailing-edge joint plate 92 by riveting, as shown in Fig. 16.
Alternatively, the joining process may be performed using bolts and nuts or by using an adhesive.

Since the blade-root-side wind-turbine blade 17 and the blade-tip-side wind-turbine blade 19 are joined to each other at three positions spaced apart in the chord direction, the joining strength can be increased.
Furthermore, since the joint structure of the blade-root-side main spars 31 and the blade-tip-side main spars 33 does not require processing, the fabrication process thereof can be readily performed.

Alternatively, if sufficient strength can be obtained, the blade-root-side wind-turbine blade 17 and the blade-tip-side wind-turbine blade 19 may be joined to each other at one or two positions in the chord direction. As a further alternative, the blade-root-side wind-turbine blade 17 and the blade-tip-side wind-turbine blade 19 may be joined to each other at four or more positions.
Although a single blade-root-side center joint plate 87 and a single blade-tip-side center joint plate 88 are joined to each other in an overlapping manner in this embodiment, the blade-tip-side center joint plate 88 may be constituted of two plates with a gap therebetween, which may be joined to the blade-root-side center joint plate 87 by sandwiching it from opposite sides, as shown in Fig. 17.

Furthermore, in order to increase the ability of the wind-turbine blade 9 to resist a torsion load, the blade-root-side center joint plate 87, for example, may be provided with a reinforcement rib extending in the chord direction, as shown in Fig. 18.
Moreover, as shown in Fig. 19, the blade-root-side center joint plate 87 may be attached such that the thickness direction thereof is substantially orthogonal to the chord direction.
Accordingly, since the width direction of the blade-root-side center joint plate 87 extends parallel to the chord direction, the ability of the wind-turbine blade, 9 to resist a torsion load can be increased.
By similarly disposing the blade-root-side leading-edge joint plate 89 and the blade-root-side trailing-edge joint plate 91 in the same direction, the ability of the wind-turbine blade 9 to resist a torsion load can be further increased.

It should be noted that the present invention is not limited to the above-described embodiments, and modifications are permissible so long as they do not deviate from the scope of the invention.

### {Reference Signs List}

- 1: wind turbine generator
- 9: wind-turbine blade
- 14: skin
- 16: main spar
- 17: blade-root-side wind-turbine blade
- 19: blade-tip-side wind-turbine blade
- 21: blade-root-side skin
- 23: blade-tip-side skin
- 25: connection-section skin
- 27: leading edge
- 29: trailing edge
- 31: blade-root-side main spar
- 33: blade-tip-side main spar
- 39: opening
- 41: blanking plate
- 43: opening
- 45: blanking plate
- 47: electrically-conductive cable
- 50: connection section
- 60: connecting plate
- 63: connecting member
- 69: blade-root-side leading-edge reinforcement member
- 71: blade-root-side trailing-edge reinforcement member
- 73: blade-tip-side leading-edge reinforcement member
- 75: blade-tip-side trailing-edge reinforcement member
- 77: connecting member
- 79: connecting member
- 87: blade-root-side center joint plate
- 88: blade-tip-side center joint plate
- 89: blade-root-side leading-edge joint plate
- 90: blade-tip-side leading-edge joint plate
- 91: blade-root-side trailing-edge joint plate
- 92: blade-tip-side trailing-edge joint plate

## Claims

1. A wind-turbine blade comprising a skin that forms a long and hollow shape; and a spar that extends in the longitudinal direction and reinforces the skin from the inside thereof,
wherein the spar is divided into multiple spar segments in the longitudinal direction, and the spar segments adjacent to each other have connection sections that are connected to each other,
wherein the skin is divided into a connection-section skin, located at a position corresponding to the connection sections, and a main-body skin, and
wherein an opening formed in the main-body skin is blocked off by a blocking plate.

2. The wind-turbine blade according to Claim 1, wherein the connection sections are connected by a connecting member that lies astride the spar segments opposed to each other so as to connect the spar segments.

3. The wind-turbine blade according to Claim 1 or 2, wherein the connection sections are connected by overlapping with each of the spar segments opposed to each other.

4. The wind-turbine blade according to any one of Claims 1 to 3, wherein an electrically-conductive cable extending in the longitudinal direction is divided into segments that are connectable to each other at the position corresponding to the connection sections.

5. The wind-turbine blade according to any one of Claims 1 to 4, further comprising a reinforcement member extending in the longitudinal direction and located at a leading-edge side and/or a trailing-edge side of the spar,
wherein the reinforcement member is divided into segments connectable to each other at the position corresponding to the connection sections.

6. The wind-turbine blade according to any one of Claims 1 to 5, wherein the joint sections are joint plates formed substantially integrally with the spar segments,

7. The wind-turbine blade according to Claim 6, wherein the joint plates include a plurality of joint plates provided in the chord direction of the blade,

8. The wind-turbine blade according to Claim 6 or 7, wherein at least one of the joint plates is attached such that the thickness direction thereof is substantially orthogonal to the chord direction.
